# FASCICULE DE BREVET EUROPEEN

(11) **EP 0 549 409 B1**
(45) Date de publication et mention de la délivrance du brevet: **16.07.1997**
(21) Numéro de dépôt: 92403407.7
(22) Date de dépôt: 15.12.1992
(51) Int. Cl.: H04L 12/26

(54) **Réseau de liaison avec capteurs de surveillance et système de diagnostic, et procédé d'établissement de diagnostics pour un tel réseau**
Verbindungsnetz mit Überwachungsfühlern und Diagnosesystem, und Verfahren zur Diagnoseerzeugung in solch einem Netz
Communication network with surveillance sensors and diagnostic system, and method for establishing diagnostics in such a network

(30) Priorité: 20.12.1991 FR 9115954
(43) Date de publication de la demande: 30.06.1993
(73) Titulaire: ALCATEL N.V., NL-1077 XX Amsterdam (NL)
(72) Inventeur: Leplingard, Bruno, F-91400 Orsay (FR); Laasri, Hassan, F-91290 Arpajon (FR)
(74) Mandataire: Bourely, Paul

(56) Documents cités:
- US-A- 4 959 849
- US-A- 5 063 523
- IEEE JOURNAL ON SELECTED AREAS IN COMMUNICATION. vol. 6, no. 5, June 1988, NEW YORK US pages 784 - 787 L.BERNSTEIN 'EXPERT SYSTEMS IN NETWORK MANAGEMENT - THE SECOND REVOLUTION'

## Description

La présente invention concerne la réalisation d'un réseau de liaison apte à véhiculer, entre des utilisateurs du réseau, des éléments matériels ou immatériels qui seront appelés ci-après des signaux. Ces signaux peuvent être par exemple des ondes électromagnétiques porteuses d'informations à transmettre entre les utilisateurs, ou les courants électriques porteurs de telles informations ou d'une énergie utile à transporter, ou encore des fluides tels qu'un gaz combustible, de l'eau ou du pétrole etc...

Un tel réseau comporte d'abord des équipements pourvus d'aptitude fonctionnelles pour assurer diverses fonctions permettant de véhiculer ces signaux. Ces équipements peuvent être par exemple des relais hertziens, des centraux de communications téléphoniques, des postes électriques, des stations de pompage, etc... Ils laissent entre eux des distances qui sont d'autant plus grandes que les utilisateurs que le réseau doit desservir sont eux-mêmes plus éloignés. Ils peuvent subir des altérations entraînant des pannes partielles ou totales du réseau.

Pour effectuer une surveillance permettant une maintenance efficace du réseau, il est connu de disposer des capteurs aptes à fournir périodiquement ou sur demande des informations qui seront appelées ci-après "de surveillance". De telles informations peuvent représenter plus ou moins directement des aptitudes fonctionnelles des équipements. D'autres telles informations peuvent représenter des caractéristiques des signaux véhiculés.

Ces informations de surveillance doivent être exploitées pour établir un diagnostic. Plus précisément, lorsqu'une altération du réseau apparaît sous la forme d'une alarme, il est souhaitable, avant d'engager une action matérielle réparatrice ou exploratoire sur l'un des équipements du réseau, de déterminer quel est l'équipement à réparer et, si cet équipement est composite, quelle est celle de ses aptitudes qui est altérée, cette détermination constituant un diagnostic. Il est connu qu'un tel diagnostic peut être établi, au moins partiellement, par un ensemble de diagnostic automatique de nature informatique. L'utilisation d'un tel ensemble présente divers avantages, notamment du point de vue de la sécurité et du coût d'exploitation du réseau et de la rapidité des réparations. Un tel ensemble de diagnostic est notamment décrit dans un article "Expert Systems for AT&T Switched Network Maintenance" (Paul H. Callahan, AT&T Technical Journal, pp. 263-273, 1988). On peut aussi consulter à ce sujet un numéro spécial de "British Telecom Technological Journal" (Vol 9, N° 3, July 1991) consacré à la gestion de réseaux de télécommunications.

Cet ensemble de diagnostic connu reçoit l'ensemble des informations de surveillance par l'intermédiaire d'un système de transmission de surveillance réalisé à cet effet. C'est sensiblement la totalité des informations de surveillance disponibles qui est reçue de manière systématique par l'ensemble de diagnostic pour permettre à celui-ci d'établir un diagnostic présentant des qualités aussi grandes que possible. Les qualités du diagnostic à considérer sont notamment sa précision et sa probabilité d'exactitude.

Dans un tel réseau, le coût du diagnostic des pannes peut constituer une partie non négligeable du coût total d'exploitation du réseau. Il comporte notamment les coûts d'installation, de maintenance et de fonctionnement des capteurs, du système de transmission de surveillance et de l'ensemble de diagnostic.

La présente invention a notamment pour buts
- d'abaisser le coût moyen du diagnostic,
- et/ou d'élever la qualité du diagnostic par élévation du nombre des informations de surveillance disponibles sans augmentation correspondante de la capacité du système de transmission de surveillance ou de la puissance de traitement de l'ensemble de diagnostic.

Dans ces buts, elle a notamment pour objet un réseau comportant des équipements pour véhiculer des signaux qui sont utiles à des utilisateurs du réseau, des capteurs pour fournir des informations sur le fonctionnement du réseau, et un ensemble de diagnostic traitant ces informations pour établir des diagnostics désignant des causes d'altérations éventuelles de ce fonctionnement, ce réseau étant caractérisé par le fait que l'ensemble de diagnostic comporte un système d'évaluation de diagnostic pour requérir des informations complémentaires lorsqu'un diagnostic précédemment établi présente une qualité insuffisante.

A l'aide des figures schématiques ci-jointes on va décrire plus particulièrement ci-après, à titre d'exemple non limitatif, comment la présente invention peut être mise en oeuvre. Lorsqu'un même élément est représenté sur plusieurs figures il y est désigné par le même signe de référence.

La figure 1 représente une vue d'ensemble d'un réseau de liaisons hertziennes selon la présente invention.

La figure 2 représente une vue d'une liaison de ce réseau.

La figure 3 représente une vue du système de transmission de surveillance de ce réseau.

La figure 4 représente une vue de l'ensemble de diagnostic de ce réseau.

On va tout d'abord décrire de manière générale en se référant à ces figures les divers éléments que des réseaux selon la présente invention et notamment celui donné en exemple peuvent comporter.

Ce réseau a pour fonction de véhiculer des signaux qui sont utiles pour ses utilisateurs.

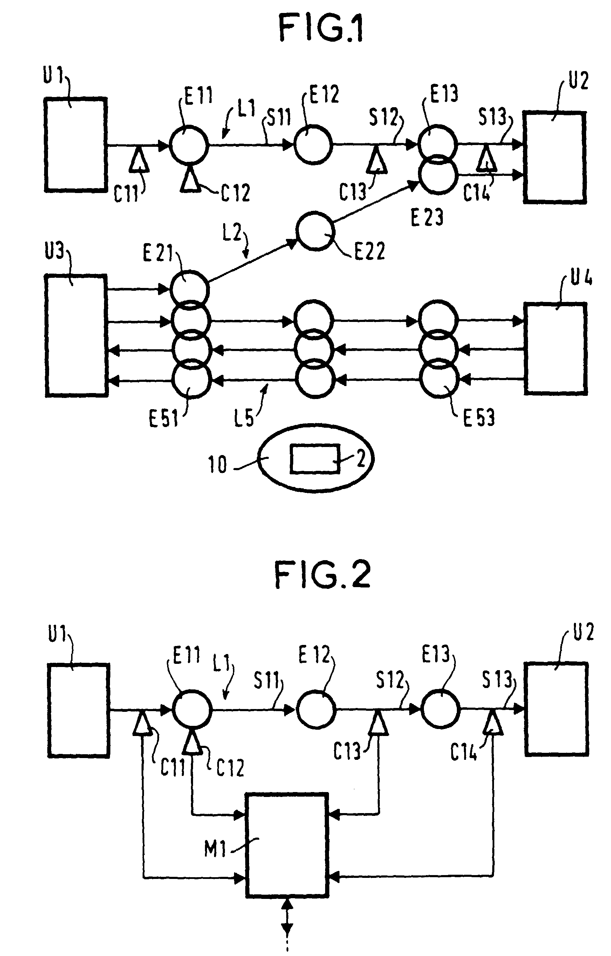

Il comporte divers éléments qui lui sont communs, quant à leurs fonctions indiquées ci-après, avec des réseaux connus. Ce sont d'abord des équipements tels que E11, E12, E13, E21, E22 et E23, E51, E53. Ces équipements réalisent des sections du réseau, telles que S11, S12, S13 (voir figure 2), associées chacune à un équipement portant une référence incluant les mêmes chiffres que cette section. Chaque section telle que S11 ou S13 s'étend dans un sens amont aval à partir de l'équipement associé E11 ou E13 jusqu'à un récepteur de cette section. Ce récepteur peut être constitué par un autre équipement tel que E12 dont la référence inclue un chiffre supérieur de 1 à celui de l'équipement associé E11 ou par un utilisateur tel que U2.

Chaque équipement est pourvu d'aptitudes fonctionnelles pour lui permettre de recevoir des signaux utiles constituant des signaux incidents pour cet équipement, et pour lui permettre d'émettre en réponse, vers le récepteur de la section associée à cet équipement, des signaux utiles constituant des signaux émergents pour cet équipement.

Les sections du réseau constituent au moins une liaison telle que L1, L2 ou L5. La liaison L1, par exemple, a un sens d'amont en aval. Elle est constituée par les sections S11, S12, S13 qui s'étendent et se succèdent dans ce sens amont aval pour relier un utilisateur amont U1 à un utilisateur aval U2 de cette liaison. Cet utilisateur amont émet des signaux utiles vers l'équipement E11 associé à la première section S11 de cette liaison. L'équipement associé à chaque autre section telle que S12 de cette liaison est celui qui, tel que E12 constitue le récepteur de la section précédente S11. L'utilisateur aval U2 constitue le récepteur de la dernière section S13 de cette liaison.

Les aptitudes fonctionnelles des équipements peuvent être normales ou présenter des altérations. Les signaux utiles ont des caractéristiques qui peuvent être normales ou présenter des altérations. Un signal utile dont toutes les caractéristiques sont normales constitue un signal normal. Chaque section peut être normale ou présenter une altération. Elle est normale dans le cas où une première et une deuxième conditions sont simultanément satisfaites. La première condition est que l'équipement associé à cette section a la possibilité de recevoir un signal incident normal. La deuxième condition est que les aptitudes fonctionnelles de cet équipement associé sont normales. Ces aptitudes fonctionnelles sont normales dans le cas où le fait que le signal incident est normal entraîne qu'un signal émergent est émis par l'équipement associé et est normal. Une altération d'une aptitude fonctionnelle d'un équipement peut empêcher cette section d'être normale et constituer alors une cause d'une altération d'au moins cette section, et dans de nombreux cas, des sections suivantes de la même liaison.

Le fonctionnement d'un tel réseau doit donc être surveillé. C'est pourquoi ce dernier comporte aussi des capteurs tels que C11, C12, C13 et C14 disposés à distances les uns des autres pour émettre des informations de surveillance représentatives de certaines aptitudes fonctionnelles des équipements et/ou de certaines caractéristiques des signaux utiles. Certaines de ces informations de surveillance peuvent, isolement ou par leur combinaison, constituer des alarmes à traiter représentant chacune une altération de section affectant au moins une section d'une liaison alors que l'utilisateur amont de cette liaison émet des signaux utiles normaux.

Pour permettre une maintenance efficace et peu coûteuse de ce réseau à partir de ces informations de surveillance, ce dernier comporte encore un ensemble de diagnostic de nature informatique disposé pour recevoir certaines des informations de surveillance. Ce système est apte à reconnaître les alarmes à traiter. Lorsqu'il a reconnu une telle alarme, il traite certaines des informations de surveillance pour établir un diagnostic par lequel une aptitude fonctionnelle d'un équipement est désignée comme représentant vraisemblablement une altération constituant une cause de l'altération de section représentée par cette alarme.

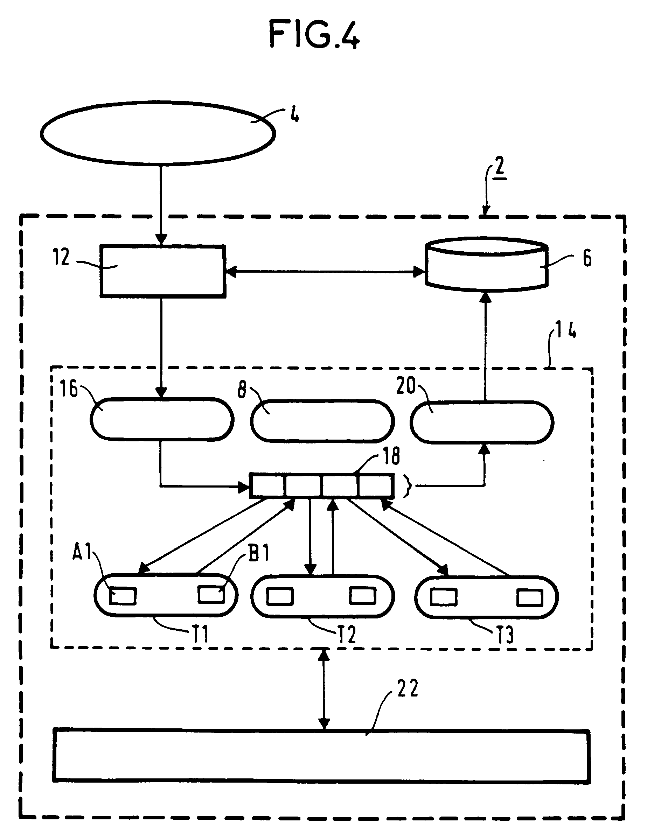

Enfin, un système de transmission de surveillance 4 (voir fig.4) est prévu pour transporter les informations de surveillance des capteurs à l'ensemble de diagnostic (2).

Selon la présente invention, ce système de transmission de surveillance est commandé par des requêtes d'information émises par l'ensemble de diagnostic. En l'absence de requête d'information, ce système de transmission de surveillance transmet à cet ensemble de diagnostic certaines des informations de surveillance pour lui permettre, au moins, de reconnaître les alarmes. Ces informations seront appelées ci-après des informations primaires. En présence d'une requête d'information, le système de transmission de surveillance transmet à l'ensemble de diagnostic certaines autres informations de surveillance qui seront appelées ci-après informations complémentaires.

L'ensemble de diagnostic doit donc alors assurer des fonctions plus diverses que s'il devait simplement établir un diagnostic. C'est pourquoi il comporte deux systèmes :
- Un système de diagnostic tel que A1 (voir figure 4) reçoit les informations de surveillance transmises à l'ensemble 2. Il traite ces informations en présence d'une alarme pour établir un diagnostic. Ce diagnostic constitue un diagnostic primaire ou secondaire selon que ces informations sont seulement des informations primaires ou comportent en outre des informations complémentaires, respectivement.
- Un système d'évaluation de diagnostic B1 est associé à ce système de diagnostic. Il évalue une qualité de chaque diagnostic primaire établi par le système de diagnostic associé, et il émet une requête d'information lorsque la qualité ainsi évaluée est inférieure à un seuil de qualité établi par ailleurs.

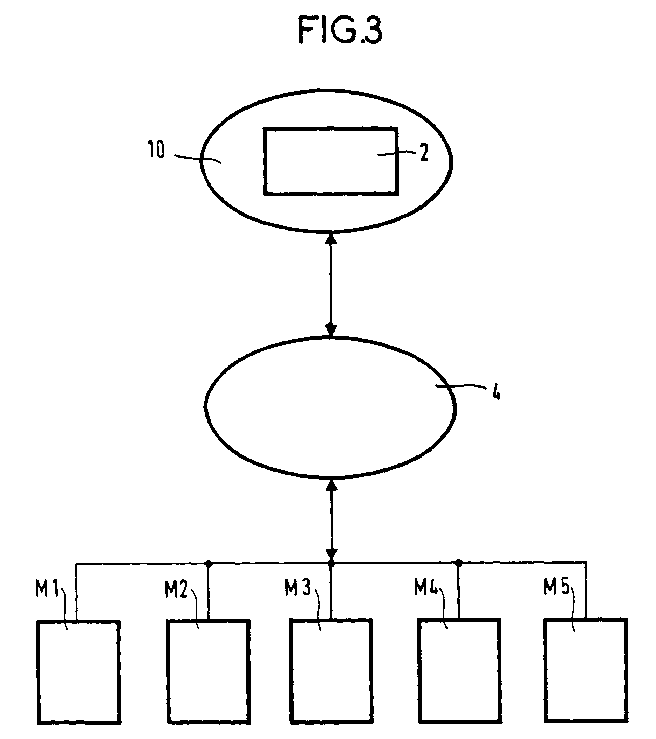

De préférence, le réseau comporte en outre des mémoires de surveillance pour stocker certaines des informations de surveillance, certaines de ces mémoires constituant des mémoires éloignées M1...M5 (voir fig.3) situées à distance de l'ensemble de diagnostic 2. Le système de transmission de surveillance 4 transporte les informations complémentaires des capteurs tes que C12, C13, C14 à ces mémoires éloignées en l'absence de requête d'information, et de ces mémoires éloignées à cet ensemble de diagnostic en présence d'une telle requête.

De préférence encore, les systèmes de diagnostics A1 et d'évaluation B1 sont des systèmes experts utilisant des bases de connaissances groupée en une base commune 6.

De préférence encore l'ensemble de diagnostic 2 comporte d'une part des moyens informatiques de nature généralement matérielle tels que des processeurs et des mémoires, notamment la base de données 6 (voir fig.4), d'autre part des modules logiciels exploitant ces moyens informatiques. Ces modules sont notamment les suivants :
- Une pluralité de spécialistes T1, T2, T3 pouvant être activés ou non. Chaque spécialiste est apte à recevoir et à traiter les informations de surveillance pour établir des diagnostic lorsqu'il est activé. Il est affecté à une famille de situations constituées chacune par une combinaison de dites altérations. Chaque spécialiste, T1 par exemple, possède une base de connaissances pouvant être située au sein de la base 6, un système de diagnostic tel que A1 et un système d'évaluation tel que B1, ceci en association. Il serait souvent préférable que la base de connaissances de chaque spécialiste soit intégrée à ce spécialiste.
- Et un module de gestion 8 apte à recevoir et à traiter au moins les informations de surveillance pour déterminer une famille de situations impliquée par ces informations. Ce module active l'un ou l'autre des spécialistes T1, T2, T3 selon la famille de situations ainsi déterminée.

On va maintenant décrire de manière plus particulière le réseau donné en exemple. Ce réseau est constitué de cinq liaisons hertziennes L1 à L5 véhiculant des signaux de nature électromagnétique portant des données qui sont utiles aux utilisateurs U1 à U4.

Chaque liaison hertzienne L1 à L5 (cf figure 1), par exemple la liaison L1, est constituée d'un ensemble d'équipements hertziens E11 à E13 qui peuvent être soit des équipements terminaux tels que E11 et E13, s'ils sont placés à une extrémité de la liaison, soit des équipements relais tels que E12. Dans cet exemple, les équipements considérés sont ceux de la famille Alcatel 9439BH de la firme française Alcatel. Une partie de liaison telle que S11 délimitée par deux équipements hertziens consécutifs tels que E11 et E12 est appelée section de la liaison. Une liaison utilise plusieurs canaux fréquentiels assurant en parallèle la transmission de signaux hertziens : à chaque canal est affectée une fréquence spécifique du signal hertzien véhiculé. Outre les canaux utilisés pour la transmission des informations, la liaison comprend un canal de secours : en cas de rupture de la transmission sur un canal, les informations à véhiculer sur ce canal sont aiguillées sur le canal de secours.

Pour réaliser la liaison, chaque équipement relais tels que E12 transmet les signaux hertziens qu'il a reçu de l'équipement tel que E11 situé en amont à l'équipement tel que E13 situé en aval. Une liaison hertzienne présente une altération lorsque l'une des caractéristiques du signal hertzien à transmettre présente elle même une altération.

Le fonctionnement des équipements hertziens est surveillé tout au long de la liaison L1 par des capteurs C11 à C13 qui enregistrent l'évolution de certaines caractéristiques des signaux hertziens (puissance, taux d'erreur, formation de la trame,...). L'intégralité des informations recueillies par ces capteurs est dans un premier temps rassemblée par un des équipements de la liaison dans des mémoires locales non représentées utilisées pour le stockage des informations de surveillance. La capacité limitée de ces mémoires locales nécessite leur vidage périodique, et ne permet pas d'archiver l'intégralité des informations de surveillance de la liaison. Un système dit d'aide à l'exploitation numérique est chargé au niveau de chaque liaison L1 à L5 de collecter et de stocker temporairement les informations de surveillance. Il constitue ladite mémoire éloignée M1 à M5, respectivement.

Une synthèse de ces informations est alors réalisée et envoyée, via des lignes de transmission de surveillance (cf figure 3), distinctes du réseau hertzien considéré, à un site central de supervision 10 où elles seront analysées. Le format des informations envoyées est alors appelé AS&C (Alarm Status and Control, en anglais ce qui signifie : situation d'alarme et commande). Ces lignes et les systèmes qui les gèrent forment le système de transmission de surveillance 4 précédemment mentionné.

Le diagnostic des problèmes survenus en cours d'exploitation du réseau hertzien est réalisé au niveau de ce site central de supervision où sont regroupés les synthèses des informations de surveillance relatives à tous les éléments du réseau. Ce site central de supervision assure également des fonctions autres que le diagnostic, nécessaires à une bonne gestion du réseau, telles que la gestion du trafic, la gestion de la taxation,...

Le diagnostic est réalisé de la façon suivante :

L'ensemble de diagnostic 2 (cf figure 4) acquiert en permanence les synthèses des informations de surveillance qui lui arrivent de façon systématique via le système de transmission de surveillance 4. Une première analyse de ces informations est réalisée par un module 12 appelé Gestionnaire d'Evènements Extérieurs. Cette première analyse a pour but d'établir si les informations de surveillance collectées correspondent à un problème grave de la liaison correspondante. Pour ce faire les informations recueillies sont comparées à des gabarits de fonctionnement normal des diverses caractéristiques des signaux hertziens : évolution de la puissance, présence d'alarmes partielles, ordre de grandeur des taux d'erreurs. Si les informations de surveillance permettent de suspecter un mauvais fonctionnement de la liaison et constituent ainsi une alarme à traiter, une description du problème est construite, c'est-à-dire que toutes les informations se rattachant pendant un laps de temps prédéterminé à la liaison altérée sont rassemblées. Une fois construite, cette description de problème est transmise à un module de raisonnement 14 qui l'insère dans une liste de problèmes à traiter.

Le traitement des problèmes est effectué par des modules logiciels T1, T2, T3 appelés spécialistes experts qui contiennent chacun la connaissance nécessaire au diagnostic d'une certaine famille de problèmes :
. le spécialiste expert de canal T1 a les connaissances nécessaires pour produire des hypothèses permettant d'expliquer les problèmes survenus sur un canal.
. le spécialiste expert de liaison T2 a les connaissances nécessaires pour synthétiser au niveau d'une liaison les hypothèses émises pour chacun des canaux la constituant.
. le spécialiste expert de réseau T3 a les connaissances nécessaires pour synthétiser au niveau d'un réseau les hypothèses émises pour chacune des liaisons le constituant.

La liste des problèmes à traiter est donc consultée par le module de gestion 8 qui va choisir le problème le plus urgent et le spécialiste le plus adapté pour résoudre ce problème.

L'activation du spécialiste expert retenu pour résoudre ce problème va produire un ensemble d'hypothèses pouvant expliquer le problème.

L'ensemble d'hypothèses généré par le système de diagnostic tel que A1 d'un spécialiste expert tel que T1 est évalué par le système d'évaluation du diagnostic associé tel que B1 en tenant compte de paramètres tels que la précision du diagnostic produit, la crédibilité de ce diagnostic,... Si le résultat de cette évaluation est jugé insuffisant, une requête est élaborée par le système d'évaluation du diagnostic pour rapatrier au niveau de l'ensemble de diagnostic des informations complémentaires concernant l'élément de réseau perturbé. Cette requête est ensuite envoyée au système d'aide à l'exploitation numérique de la liaison correspondante via le système de transmission de surveillance.

Une fois les informations complémentaires réunies par la liaison, ces informations sont envoyées à l'ensemble de diagnostic, toujours via le système de transmission de surveillance. Elles seront traitées comme précédemment par le système de diagnostic A1 pour essayer de raffiner le diagnostic établi lors du traitement des informations primaires.

Les données transmises vers et à partir des divers spécialistes experts transitent par un module 18 appelé "tableau noir" qui communique en entrée avec le gestionnaire d'événements extérieur 12 par l'intermédiaire d'un module de prétraitement 16. Le module 18 communique d'autre part avec la base de données 6 par l'intermédiaire d'un module intermédiaire de données 20.

L'ensemble de diagnostic comprend également la base de données 6 utilisée pour sauvegarder les diagnostics établis, et une interface homme-machine 22 permettant l'accès d'un opérateur aux fonctions de l'ensemble de gestion.

## Revendications

1. Réseau de liaison avec capteurs de surveillance et système de diagnostic, ce réseau comportant des équipements (E11...E53) pour véhiculer des signaux qui sont utiles à des utilisateurs (U1...U4) du réseau, des capteurs (C11...C14) pour fournir des informations sur le fonctionnement du réseau, et un ensemble de diagnostic (2) traitant ces informations pour établir des diagnostics désignant des causes d'altérations éventuelles de ce fonctionnement, ce réseau étant caractérisé par le fait que l'ensemble de diagnostic (2) comporte un système d'évaluation de diagnostic (B1) pour requérir des informations complémentaires lorsqu'un diagnostic précédemment établi présente une qualité insuffisante.

2. Réseau selon la revendication 1, ce réseau véhiculant des signaux utiles entre des utilisateurs (U1,U2) de ce réseau et comportant
- des équipements (E11, E12, E13) réalisant des sections (S11, S12, S13) du réseau en association mutuelle respective avec ces équipements, chaque section (S11 S13) ayant un sens amont-aval et s'étendant dans ce sens à partir d'un équipement (E11, E13) associé à cette section jusqu'à un récepteur (E12, U2) de cette section constitué par un autre équipement (E12) ou par un utilisateur (U2) du réseau, chaque équipement étant pourvu d'aptitudes fonctionnelles pour lui permettre de recevoir des signaux utiles constituant des signaux incidents pour cet équipement, et pour lui permettre d'émettre en réponse, vers le récepteur de la section associée à cet équipement, des signaux utiles constituant des signaux émergents pour cet équipement, ces sections constituant au moins une liaison L1...L5, chaque liaison (L1) ayant un sens amont-aval et étant constituée par des sections (S11, S12, S13) s'étendant et se succédant dans ce sens amont-aval pour relier un utilisateur amont (U1) à un utilisateur aval (U2) de cette liaison, cet utilisateur amont émettant des signaux utiles vers un équipement (E11) associé à une première section (S11) de cette liaison, l'équipement associé à chaque autre section (S12) de cette liaison étant constitué par le récepteur (E12) d'une section précédente (S11), cet utilisateur aval (U2) constituant le récepteur d'une dernière section (S13) de cette liaison, les aptitudes fonctionnelles des équipements pouvant être normales ou présenter des altérations, des signaux utiles ayant des caractéristiques pouvant être normales ou présenter des altérations, un signal utile dont toutes les caractéristiques sont normales constituant un signal normal,
chaque section pouvant être normale ou présenter une altération, cette section étant normale dans le cas où une première et une deuxième conditions sont simultanément satisfaites, cette première condition étant que l'équipement associé à cette section a la possibilité de recevoir un signal incident normal, cette deuxième condition étant que les aptitudes fonctionnelles dudit équipement associé sont normales, ces aptitudes fonctionnelles étant normales dans le cas où le fait que ledit signal incident est normal entraîne qu'un dit signal émergent est émis par ledit équipement associé et est normal, une altération d'une dite aptitude fonctionnelle d'un dit équipement pouvant empêcher cette section d'être normale et constituant alors une cause d'une altération d'au moins cette section,
- des capteurs (C11, C14) disposés à distances les uns des autres pour émettre des informations de surveillance représentatives de certaines aptitudes fonctionnelles desdits équipements et/ou de certaines caractéristiques desdits signaux utiles, certaines de ces informations de surveillance pouvant constituer des alarmes à traiter représentant chacune une altération d'au moins une section d'une liaison dont l'utilisateur amont émet des signaux utiles normaux,
- un ensemble de diagnostic (2) de nature informatique disposé pour recevoir certaines desdites informations de surveillance et pour reconnaître lesdites alarmes à traiter, ce système étant agencé pour réagir à une alarme en traitant certaines desdites informations de surveillance pour établir un diagnostic par lequel une aptitude fonctionnelle d'un dit équipement est désignée comme présentant vraisemblablement une altération constituant une dite cause de l'altération de section représentée par cette alarme,
- et un système de transmission de surveillance (4) pour transporter lesdites informations de surveillance desdits capteurs audit ensemble de diagnostic,
ledit réseau étant caractérisé par le fait que ledit système de transmission de surveillance (4) est commandé par des requêtes d'information émises par ledit ensemble de diagnostic (2), ce système de transmission de surveillance transmettant à cet ensemble de diagnostic, en l'absence de dite requête d'information, certaines desdites informations de surveillance constituant des informations primaires au moins aptes à constituer lesdites alarmes, ce système de transmission de surveillance transmettant à cet ensemble de diagnostic, en présence d'une dite requête d'information, certaines autres desdites informations de surveillance constituant des informations complémentaires,
- ledit ensemble de diagnostic (2) comportant :
- un système de diagnostic (A1) recevant les informations de surveillance transmises à cet ensemble et traitant ces informations en présence d'une dite alarme pour établir un dit diagnostic, ce diagnostic constituant un diagnostic primaire ou secondaire selon que ces informations sont seulement lesdites informations primaires ou comportent en outre desdites informations complémentaires, respectivement,
- et un système d'évaluation de diagnostic (B1) associé à ce système de diagnostic pour évaluer une qualité de chaque diagnostic primaire établi par le système de diagnostic associé, et pour émettre une dite requête d'information lorsque la qualité ainsi évaluée est inférieure à un seuil de qualité établi par ailleurs.

3. Réseau selon la revendication 2, ce réseau comportant en outre des mémoires de surveillance pour stocker certaines desdites informations de surveillance, certaines de ces mémoires constituant des mémoires éloignées (M1...M5) situées à distance dudit ensemble de diagnostic (2), ledit système de transmission (4) de surveillance transportant desdites informations complémentaires desdits capteurs (C11...C14) à ces mémoires éloignées en l'absence de dite requête d'information, et de ces mémoires éloignées à cet ensemble de diagnostic en présence d'une telle requête.

4. Réseau selon la revendication 2, ledit ensemble de diagnostic (2) comportant des bases de connaissances (6), lesdits systèmes de diagnostic (A1) et d'évaluation (B1) étant des systèmes experts utilisant ces bases de connaissances.

5. Réseau selon la revendication 4, ledit ensemble de diagnostic comportant
- des moyens informatiques (6),
- et des modules logiciels exploitant ces moyens informatiques et constituant :
- une pluralité de spécialistes (T1...T3) pouvant être activés ou non, chaque spécialiste étant apte à recevoir et à traiter lesdites informations de surveillance pour établir un dit diagnostic lorsqu'il est activé, chaque spécialiste étant affecté à une famille de situations constituées chacune par une combinaison desdites altérations, chaque spécialiste (T1) possédant une dite base de connaissances (6), un dit système de diagnostic (A1) et un dit système d'évaluation (B1) associés,
- et un module de gestion (8) apte à recevoir et à traiter au moins lesdites informations de surveillance pour déterminer une dite famille de situations impliquée par ces informations et pour activer l'un ou l'autre des spécialistes (T1, T2, T3) selon la famille de situations ainsi déterminée.

6. Réseau selon la revendication 1, lesdits signaux utiles étant véhiculés pour porter des informations utiles et pour les transmettre à des utilisateurs (U1...U4) utilisant ce réseau.

7. Procédé d'établissement de diagnostic pour réseau de liaison, ce procédé comportant les opérations suivantes :
- émission d'informations de surveillance représentatives d'aptitudes fonctionnelles d'équipements (E11...E53) du réseau et/ou représentatives de caractéristiques de signaux utiles véhiculés par des sections de liaison (S11...S13) formées par ces équipements, certaines informations de surveillance pouvant constituer des alarmes représentant des altérations de ces sections,
- et établissement de diagnostics par traitement de ces informations de surveillance en cas d'alarme pour désigner une altération d'une dite aptitude fonctionnelle, cette altération étant une cause supposée d'une altération de section représentée par cette alarme,
ce procédé étant caractérisé par le fait que certaines opérations d'établissement de diagnostic établissent des diagnostics primaires et sont complétées chacune par les opérations suivantes :
- évaluation dudit diagnostic primaire établi,
- émission d'une requête d'information pour obtenir des informations complémentaires dans le cas où ce diagnostic primaire présente une qualité inférieure à un seuil établi par ailleurs,
- et établissement d'un diagnostic secondaire par traitement d'informations de surveillance incluant ces informations complémentaires.

## Patentansprüche

1. Verbindungsnetz mit Überwachungsmeßsonden und einem Diagnostiksystem, wobei das Netz Einrichtungen (E11, ... E53) zur Übermittlung der Signale, die für die Benutzer (U1, .. U4) des Netzes nützlich sind, Meßsonden (C11 ... C14), die Informationen über den Betrieb des Netzes liefern, und eine Diagnostikeinheit (2) aufweist, die diese Informationen bearbeitet und Diagnostikbilder erzeugt, die die Gründe für eventuelle Veränderungen dieses Betriebs bezeichnen, dadurch gekennzeichnet, daß die Diagnostikeinheit (2) ein Diagnostikbewertungssystem (B1) aufweist, das zusätzliche Informationen anfordern kann, wenn ein vorher erstelltes Diagnostikbild eine unzureichende Qualität besitzt.

2. Netz nach Anspruch 1, das Nutzsignale zwischen Benutzern (Ul, U2) dieses Netzes überträgt und aufweist:
- Einrichtungen (E11, E12, E13), die Abschnitte (S11, S12, S13) des Netzes in jeweils wechselseitiger Zuordnung zu diesen Einrichtungen bilden, wobei jeder Abschnitt (S11, S13) sich von einer "vorderen" Einrichtung (E11, E13) bis zu einem Empfänger (E12, U2) am hinteren Ende dieses Abschnitts erstreckt, der von einer anderen Einrichtung (E12) oder einem Benutzer (U2) des Netzes gebildet wird, wobei jede Einrichtung funktionale Fähigkeiten besitzt, um Nutzsignale, die ankommende Signale für diese Einrichtung bilden, zu empfangen und um als Antwort an den Empfänger des dieser Einrichtung zugeordneten Abschnitts Nutzsignale auszusenden, die Ausgangssignale für diese Einrichtung bilden, wobei die Abschnitte mindestens eine Verbindung (L1, .. L5) bilden und jede Verbindung (L1) ein "vorderes" und ein "hinteres" Ende besitzt und aus Abschnitten (S11, S12, S13) gebildet wird, die sich aufeinanderfolgend vom vorderen zum hinteren Ende erstrecken, um einen vorderen Benutzer (U1) an einen hinteren Benutzer (U2) dieser Verbindung anzuschließen, wobei der vordere Benutzer Nutzsignale an eine einem ersten Abschnitt (S11) dieser Verbindung zugeordnete Einrichtung (E11) sendet und die jedem weiteren Abschnitt (S12) dieser Verbindung zugeordnete Einrichtung aus dem Empfänger (E12) eines vorhergehenden Abschnitts (S11) gebildet ist, wobei der Benutzer (U2) am hinteren Ende den Empfänger eines letzten Abschnitts (S13) dieser Verbindung bildet, wobei die funktionalen Fähigkeiten dieser Einrichtungen normal sein können oder Veränderungen aufweisen können und Nutzsignale Merkmale haben können, die normal sind oder Veränderungen aufweisen sowie ein Nutzsignal, dessen Merkmale alle normal sind, ein normales Signal bildet, wobei jeder Abschnitt normal sein kann oder eine Veränderung aufweisen kann, wobei jeder Abschnitt normal ist, wenn zwei Bedingungen zugleich erfüllt sind, von denen die erste besagt, daß die diesem Abschnitt zugeordnete Einrichtung die Möglichkeit hat, ein normales ankommendes Signal zu empfangen, während die zweite Bedingung darin besteht, daß die funktionalen Fähigkeiten der zugeordneten Einrichtung normal sind, wobei diese funktionalen Fähigkeiten normal sind, wenn die Tatsache, daß das ankommende Signal normal ist, zu einem ebenfalls normalen ausgehenden Signal führt, das von der betreffenden Einrichtung ausgesendet wird, während eine Veränderung einer funktionalen Fähigkeit einer Einrichtung diesen Abschnitt daran hindern kann, normal zu sein und damit einen Grund für die Veränderung mindestens dieses Abschnitts bildet,
- Meßsonden (C11, C14), die in einem gegenseitigen Abstand angeordnet sind, um Überwachungsinformationen auszusenden, die für bestimmte funktionale Fähigkeiten der Einrichtungen und/oder bestimmte Merkmale der Nutzsignale repräsentativ sind, wobei bestimmte dieser Überwachungsinformationen zu bearbeitende Alarmmeldungen bilden können, die je eine Veränderung mindestens eines Abschnitts einer Verbindung repräsentieren, auf der der vor diesem Abschnitt liegende Benutzer normale Nutzsignale aussendet,
- eine Informatik-Diagnostikeinheit (2), die bestimmte der Überwachungsinformationen empfangen kann und die zu bearbeitenden Alarmmeldungen erkennen kann, wobei das System so ausgebildet ist, daß es auf einen Alarm reagiert, indem bestimmte der Überwachungsinformationen bearbeitet werden, um ein Diagnostikbild zu erstellen, durch das eine funktionale Fähigkeit einer Einrichtung als vermutlich verändert bezeichnet wird, wobei diese Veränderung ein Grund für die Veränderung des durch diese Alarmmeldung repräsentierten Abschnitts bildet,
- und ein Übertragungssystem (4) für Überwachungsinformationen, um die Überwachungsinformationen von den Meßsonden an die Diagnostikeinheit zu transportieren, dadurch gekennzeichnet, daß das Übertragungssystem (4) für Überwachungsinformationen durch Informationanfragen gesteuert wird, die von der Diagnostikeinheit (2) ausgesendet werden, wobei das Übertragungssystem für Überwachungsinformationen an die Diagnostikeinheit in Abwesenheit einer solchen Informationsanfrage bestimmte der Überwachungsinformationen überträgt, die Primärinformationen bilden und zumindest geeignet sind, die Alarmmeldungen zu bilden, während das Übertragungssystem für Überwachungsinformationen an die Diagnostikeinheit bei Vorliegen einer Informationsanfrage bestimmte weitere Überwachungsinformationen überträgt, die komplementäre Informationen bilden,
- wobei die Diagnostikeinheit (2) aufweist:
* ein Diagnostiksystem (Al), das die an diese Einheit übermittelten Überwachungsinformationen empfängt und bei Vorliegen einer Alarmmeldung bearbeitet, um ein Diagnostikbild zu erstellen, das ein primäres oder sekundäres Diagnostikbild ist, je nachdem, ob diese Informationen nur die Primärinformationen sind oder auch die Komplementärinformationen enthalten,
* und ein Bewertungssystem (B1) des Diagnostikbildes, das diesem Diagnostiksystem zugeordnet ist, um eine Qualität jedes primären Diagnostikbilds, das von dem zugeordneten Diagnostiksystem erstellt wurde, zu bewerten und um eine Informationsanfrage auszusenden, wenn die so bewertete Qualität geringer als eine an anderer Stelle etablierte Qualitätsschwelle ist.

3. Netz nach Anspruch 2, das weiter Überwachungsspeicher enthält, um bestimmte der Überwachungsinformationen zu speichern, wobei bestimmte dieser Speicher entfernte Speicher (M1, .. M5) sind, die von der Diagnostikeinheit (2) entfernt angeordnet sind, und wobei das Übertragungssystem (4) für Überwachungsinformationen die komplementären Informationen der Sonden (C11, ... C14) an diese entfernten Speicher übermitteln, wenn keine Informationsanfrage vorliegt, und von diesen entfernten Speichern weiter zur Diagnostikeinheit, wenn eine solche Anfrage vorliegt.

4. Netz nach Anspruch 2, in dem die Diagnostikeinheit (2) mindestens eine Basis (6) von Kenntnissen enthält und daß das Diagnostiksystem (A1) und das Bewertungssystem (B1) Expertensysteme sind, die diese Kenntnisse nutzen.

5. Netz nach Anspruch 4, in dem die Diagnostikeinheit aufweist:
- Informatikmittel (6),
- und Softwaremoduln, die diese Informatikmittel betreiben und enthalten:
- mehrere Spezialisten (T1, .. T3), die aktiviert sind oder nicht und in der Lage sind, die Überwachungsinformationen zu bearbeiten und ein Diagnostikbild zu erstellen, wenn sie aktiviert sind, wobei jeder Spezialist für eine Familie von Situationen zuständig ist, die je von einer Kombination der Veränderungen gebildet werden, wobei jeder Spezialist (T1) eine Basis (6) von Kenntnissen Diagnostiksystem (A1) und ein Bewertungssystem (B1) enthält,
- und einen Verwaltungsmodul (8), der mindestens die Überwachungsinformationen empfangen und behandeln kann, um eine Familie von Situationen zu bestimmen, die durch diese Informationen betroffen ist, und um den einen oder anderen der Spezialisten (T1, t2, T3) je nach der so bestimmten Familie von Situationen zu aktivieren.

6. Netz nach Anspruch 1, in dem die Nutzsignale Nutzinformationen an die Benutzer (U1, .. U4) übertragen, die dieses Netz benutzen.

7. Verfahren zur Erzeugung von Diagnostikbildern für das Verbindungsnetz, das folgende Verfahrensschritte enthält:
- Aussendung von Überwachungsinformationen, die für funktionale Fähigkeiten der Einrichtungen (E11, .. E53) des Netzes und/oder für Merkmale von über die von diesen Einrichtungen gebildeten Abschnitte (S11, .. S13) verlaufenden nützlichen Signale repräsentativ sind, wobei manche Überwachungsinformationen Alarmmeldungen bilden können, die Veränderungen dieser Abschnitte bezeichnen,
- und die Erstellung von Diagnostikbildern durch Verarbeitung dieser Überwachungsinformationen im Fall einer Alarmmeldung, um eine Veränderung einer der funktionalen Fähigkeiten zu bezeichnen, die ein möglicher Grund für eine Veränderung des durch diese Alarmmeldung repräsentierten Abschnitts ist,
dadurch gekennzeichnet, daß bestimmte Operationen der Erstellung eines Diagnostikbilds primäre Diagnostikbilder erstellen und je durch folgende Operationen vervollständigt werden:
- Bewertung des erstellten primären Diagnostikbilds,
- Aussendung einer Informationsanfrage, um zusätzliche Informationen zu erhalten, wenn das primäre Diagnostikbild eine unter einer an anderer Stelle definierten Schwelle liegende Qualität besitzt,
- und Erstellung eines sekundären Diagnostikbilds durch die Verarbeitung von Überwachungsinformationen, die diese komplementären Informationen einschließen.

## Claims

1. Network with surveillance sensors and diagnostic system comprising equipments (E11 ... E53) for conveying signals of utility to network users (U1 ... U4), sensors (C11 ... C14) for supplying data on the operation of the network and a diagnostic system (2) processing said data to establish diagnostics identifying causes of degraded operation, characterised in that the diagnostic system (2) comprises a diagnostic evaluation system (B1) for requesting secondary data if a diagnostic previously established is insufficient.

2. Network according to claim 1 adapted to convey signals between network users (U1, U2) and comprising:
- equipments (E11, E12, E13) implementing sections (S11, S12, S13) of the network in respective mutual association with said equipments, each section (S11, S13) having an upstream-downstream direction and extending in said direction from an equipment (E11, E13) associated with said section to a receiver (E12, U2) of said section constituted by another equipment (E12) or by a network user (U2), each equipment having functional capabilities enabling it to receive signals constituting incident signals for said equipment and enabling it to send in response to the receiver of the section associated with said equipment signals constituting emergent signals for said equipment, said sections constituting at least one link (L1 ... L5), each link (L1) having an upstream-downstream direction and comprising sections (S11, S12, S13) extending in sequence in said upstream-downstream direction to connect an upstream user (U1) to a downstream user (U2) of said link, said upstream user sending signals to an equipment (E11) associated with a first section (S11) of said link, the equipment associated with each other section (S12) of said link comprising the receiver (E12) of a preceding section (S11), said downstream user (U2) constituting the receiver of a last section (S13) of said link, the functional capabilities of said equipments being normal or degraded, said signals having normal or degraded characteristics, a signal of which all said characteristics are normal constituting a normal signal,
each section being normal or degraded, said section being normal if first and second conditions are simultaneously satisfied, said first condition being that the equipment associated with said section is able to receive a normal incident signal, said second condition being that the functional capabilities of said associated equipment are normal, said functional capabilities being normal if a normal incident signal causes a normal emergent signal to be sent by said associated equipment, degradation of a functional capability of an equipment possibly preventing said section from being normal and then constituting a cause of at least said section being degraded,
- sensors (C11, C14) disposed remotely of each other to send surveillance data representing functional capabilities of said equipments and/or characteristics of said signals, some of said surveillance data being adapted to constitute alarms to be processed each representing degradation of at least one section of a link the upstream user of which is sending normal signals,
- a computer-based diagnostic system (2) adapted to receive some of said surveillance data and to recognise said alarms to be processed, said system being adapted to react to an alarm by processing some of said surveillance data to establish a diagnostic whereby a functional capability of an equipment is designated as probably degraded and causing section degradation as indicated by said alarm, and
- a surveillance transmission system (4) for conveying said surveillance data from said sensors to said diagnostic system,
said network being characterised in that said surveillance transmission system (4) is controlled by data requests sent by said diagnostic system (2), said surveillance transmission system sending to said diagnostic system in the absence of any request for data some of said surveillance data constituting primary data adapted to constitute at least said alarms and said surveillance transmission system transmitting to said diagnostic system in the presence of a request for data other of said surveillance data constituting secondary data,
- said diagnostic system (2) comprising:
- a diagnostic system (A1) receiving surveillance data transmitted to said system and processing said data when an alarm is present to establish a diagnostic constituting a primary or secondary diagnostic according to whether said data comprises only said primary data or said primary data and said secondary data, respectively, and
- a diagnostic evaluation system (B1) associated with said diagnostic system to evaluate an attribute of each primary diagnostic established by the associated diagnostic system and to send a request for data if the attribute evaluated is below a threshold determined elsewhere.

3. Network according to claim 2 further comprising surveillance memories for storing some of said surveillance data, some of said memories constituting remote memories (M1 ... M5) situated remotely of said diagnostic system (2), said surveillance transmission system (4) conveying said secondary data from said sensors (C11 ... C14) to said remote memories in the absence of any request for data and from said remote memories to said diagnostic system in the presence of a request for data.

4. Network according to claim 2, said diagnostic system (2) comprising knowledge bases (6), said diagnostic and evaluation systems (A1, E1) being expert systems which use said knowledge bases.

5. Network according to claim 4, said diagnostic system comprising
- data processing means (6),
- and software modules using said data processing means and constituting:
- a plurality of specialists (T1 ... T3) which can be selectively activated, each specialist being adapted to receive and to process said surveillance data to establish a diagnostic when it is activated, each specialist being assigned to a family of situations each comprising a combination of ways in which the network may be degraded, each specialist (T1) having a knowledge base (6), a diagnostic system (A1) and an associated evaluation system (B1), and
- a management module (8) adapted to receive and to process at least said surveillance data to determine a family of situations implied by said data and to activate one or other of said specialists (T1, T2, T3) according to the family of situations thus determined.

6. Network according to claim 1, said signals being conveyed to carry data and to transmit it to network users (U1 ... U4).

7. Method of establishing diagnostics for networks comprising the following operations:
- sending surveillance data representing functional capabilities of equipments (E11 ... E53) of the network and/or representing characteristics of signals conveyed by link sections (S11 ... S13) formed by said equipments, some surveillance data being adapted to constitute alarms representing degradation of said sections, and
- establishing diagnostics by processing said surveillance data when an alarm is present to designate a degraded functional capability assumed to be the cause of degradation of a section as indicated by said alarm,
said method being characterised in that some operations for establishing primary diagnostics are each complemented by the following operations:
- evaluating said established primary diagnostic,
- sending a request for data to obtain secondary data if the primary diagnostic has an attribute below a threshold determined elsewhere, and
- establishing a secondary diagnostic by processing surveillance data including said secondary data.
